# FASCICULE DE BREVET EUROPEEN

(11) **EP 3 870 498 B1**
(45) Date de publication et mention de la délivrance du brevet: **14.08.2024**
(21) Numéro de dépôt: 19787021.5
(22) Date de dépôt: 12.09.2019
(51) Int. Cl.: B62D 35/02, B60R 13/08

(54) **VÉHICULE AUTOMOBILE AVEC DÉFLECTEUR SOUS-PLANCHER A DEUX NIVEAUX**
KRAFTFAHRZEUG MIT ZWEISTUFIGEM UNTERBODENDEFLEKTOR
MOTOR VEHICLE WITH TWO-LEVEL UNDERFLOOR DEFLECTOR

(30) Priorité: 24.10.2018 FR 1859843
(43) Date de publication de la demande: 01.09.2021
(73) Titulaire: Stellantis Auto SAS, 78300 Poissy (FR)
(72) Inventeur: BERTH, Stephane, 92320 CHATILLON (FR)
(86) Numéro de dépôt international: PCT/FR2019/052103
(87) Numéro de publication internationale: WO 2020/084208

(56) Documents cités:
- EP-A1- 2 623 401
- DE-A1- 102013 009 256
- FR-A1- 2 975 659
- JP-A- 2006 205 910

## Description

L'invention se situe dans le domaine des véhicules et, plus particulièrement, des véhicules automobiles. L'invention a trait à un véhicule présentant un déflecteur sous-plancher.

Il est connu de proposer un écran aéraulique sous la caisse d'un véhicule automobile de manière à améliorer la résistance du véhicule par rapport aux forces aérodynamiques, ce qui permet notamment de diminuer la consommation de carburant. L'ajout d'un ou plusieurs de ces écrans sous le plancher permet ainsi de faciliter l'écoulement de l'air sous le véhicule, ces écrans sont également nommés déflecteurs sous-plancher. En plus de l'effet aérodynamique, les déflecteurs sous-plancher peuvent contribuer à limiter l'entrée de débris, de poussière et/ou d'eau dans les organes de fonctionnement du véhicule, ou à la diminution du bruit.

Au sein d'un véhicule, les équipements se trouvant au-dessus du ou des déflecteurs sous-plancher sont généralement protégés par ceux-ci. Par exemple, dans le cas d'un véhicule automobile électrique, ce sont les batteries, généralement situées au centre du véhicule, sous les sièges, qui se trouvent au-dessus des déflecteurs sous-plancher. Dans le cas d'un déflecteur sous-plancher s'étendant à l'avant du véhicule, un risque non négligeable de casse dudit déflecteur est présent, spécifiquement lorsque le véhicule automobile monte ou descend d'un trottoir puisque la garde au sol se trouve diminuée au niveau dudit déflecteur. Il a été en effet constaté que la portion avant dudit déflecteur sous-plancher bute contre ledit trottoir. Les casses sont majoritairement répertoriées au niveau des tirants, c'est-à-dire au niveau des moyens de renfort arrière de berceau avant, les moyens de renforts étant englobés par ledit déflecteur sous-plancher.

La demande de brevet US 2016/0339970 a trait à une structure de véhicule et décrit notamment deux écrans aérodynamiques fixés sous la caisse du véhicule, comportant une paroi verticale qui s'étend dans la direction longitudinale du véhicule de manière à réguler ou à empêcher un flux d'air de circuler vers la moitié avant du véhicule. Le risque de casse est donc bel et bien présent à cause de la paroi verticale lorsque le véhicule roule sur des routes irrégulières.

La demande de brevet internationale WO 2006/115 988 présente un déflecteur d'air pour un véhicule de type camion. Le déflecteur d'air peut s'infléchir en cas d'impact. Le système déflecteur d'air peut être déployé à des vitesses élevées alors qu'il est rangé sous le châssis du camion lorsque le camion roule sur des chaussées irrégulières. Ainsi, le risque d'endommager le déflecteur est réduit. Le système déflecteur est actionné via des moyens pneumatiques, hydrauliques ou mécaniques. La complexité du mécanisme de déploiement, notamment du point de vue de sa mise en place sur un véhicule et de son entretien, est un frein à la généralisation de ce type de systèmes sur les véhicules automobiles courants. Le document DE 10 2013 009256 A1 divulgue les caractéristiques du préambule de la revendication 1.

L'invention a pour objectif d'apporter une solution aux inconvénients rencontrés dans l'art antérieur en proposant un moyen simple et économique d'éviter ou du moins de limiter les casses en partie avant d'un déflecteur sous-plancher lors des montées et descentes de trottoir.

A cet effet, et selon un premier aspect, l'invention a pour objet un véhicule automobile comprenant un soubassement présentant une partie avant et une partie arrière, un berceau de moteur, un déflecteur sous-plancher fixé à la fois sous la partie avant dudit soubassement et sous ledit berceau, ledit déflecteur sous-plancher comprenant une portion avant et une portion arrière, la portion avant étant agencée en regard dudit berceau ; le véhicule étant remarquable en ce que la portion avant et la portion arrière du déflecteur sous-plancher s'étendent selon des plans horizontaux étagés selon l'axe vertical de manière à ce que la portion avant s'étende selon un plan supérieur au plan selon lequel s'étend la portion arrière. Le véhicule comprend en outre au moins un moyen de renfort ayant une extrémité arrière fixée à la partie avant dudit soubassement et une extrémité avant fixée audit berceau, le véhicule est remarquable en ce que le déflecteur sous-plancher est configuré pour recouvrir partiellement ledit moyen de renfort et présente au moins une ouverture au niveau de sa partie avant agencée pour être traversée par l'extrémité avant d'un moyen de renfort.

Comme on l'aura compris à la lecture de la définition qui vient d'en être donnée, l'invention propose de doter un véhicule d'un déflecteur sous-plancher non-plan, présentant une portion avant et une portion arrière montrant une garde au sol différente. La portion avant montrant une garde au sol supérieure à celle de la portion arrière, elle est moins susceptible d'entrer en contact avec le bord d'un trottoir par rapport à l'art antérieur où les deux portions montraient une garde au sol similaire. L'invention propose un moyen simple de résoudre les problèmes de casse du déflecteur sous-plancher en lui donnant un profil incurvé en S. La portion la plus haute est agencée en regard du berceau et éventuellement d'une zone de la partie avant du soubassement.

De plus, cette configuration est avantageuse en ce que, en offrant la possibilité à au moins un moyen de renfort de traverser le corps du déflecteur sous-plancher, l'invention permet de disposer plus en arrière du véhicule la portion du déflecteur sous-plancher s'étendant selon le plan le plus proche du sol par rapport à son implantation dans l'art antérieur. On aura compris que le déflecteur sous-plancher selon l'invention n'englobe plus le ou les moyens de renfort (i.e. les tirants arrière) dans leur intégralité, mais juste partiellement. Selon l'invention, l'extrémité avant du ou des moyens de renfort s'étend en saillie par rapport à la surface extérieure du déflecteur sous-plancher.

De manière préférentielle, le ou les moyens de renfort se présentant sous forme d'un profilé en forme de U comprenant un fond et deux ailes latérales et agencé pour être ouvert en direction du sol ; le véhicule est remarquable en ce que la ou au moins une desdites ouvertures est agencée pour qu'un de ses bords soit disposé sur la portion arrière dudit déflecteur sous-plancher et son bord opposé sur la portion avant et en ce que ledit déflecteur sous-plancher comprend une languette au niveau de ladite ouverture, la languette étant configurée pour s'étendre depuis le bord de l'ouverture situé au niveau de la portion arrière du déflecteur sous-plancher en direction du fond du profilé entre lesdites ailes latérales du profilé de manière à obstruer au moins en partie ladite ouverture. Cette configuration est avantageuse en ce qu'elle permet d'éviter ou du moins de limiter les entrées d'eau ou d'air sous le déflecteur sous-plancher pendant le roulage du véhicule.

Selon une variante de l'invention, la languette présentant une extrémité libre, le véhicule est remarquable en ce qu'au moins une languette est configurée pour que son extrémité libre se place en appui contre le fond du moyen de renfort ; et/ou en ce que ladite languette présente un profil incurvé de manière à ce que son extrémité libre s'étende horizontalement selon un plan parallèle à celui du fond du moyen de renfort ; de préférence en appui contre ce dernier. Le fait que la languette se place en appui, donc sous contrainte élastique contre le fond dudit moyen de renfort, permet d'éviter la génération de nuisances sonores suite aux vibrations de l'extrémité libre de la languette contre ledit fond durant le roulage du véhicule.

Selon une autre variante de l'invention, au moins une languette est reliée par ses deux extrémités aux bords de l'ouverture de manière à définir deux fentes latérales traversées par les ailes du profilé formant le moyen de renfort. De préférence, la languette comprend un ajour destiné à recevoir un organe de fixation, ledit ajour étant aligné avec un ajour présenté par ledit moyen de renfort pour sa fixation sur le berceau. La configuration dans laquelle l'ouverture pour le passage d'un moyen de renfort est divisée en deux par une languette centrale est avantageuse en ce qu'elle minimise l'aire de ladite ouverture en la réduisant au strict minimum nécessaire pour le passage des ailes du moyen de renfort. Cette configuration contribue à éviter ou du moins à limiter les entrées d'eau ou d'air sous le déflecteur pendant le roulage du véhicule. Selon une caractéristique de l'invention, le déflecteur sous-plancher présentant un corps, le véhicule est remarquable en ce qu'au moins une languette est venue de matière avec ledit corps du déflecteur sous-plancher. Cette caractéristique rend l'invention économique en ce qu'elle n'implique pas la mise en oeuvre de pièces supplémentaires et donc d'étapes de montage additionnelles.

Selon un mode de réalisation de l'invention, le bord de la ou des ouvertures présente un rebord s'étendant depuis la portion avant du déflecteur sous-plancher en direction du sol. Cette configuration limite les entrées d'eau ou d'air sous le déflecteur pendant le roulage du véhicule.

L'invention sera bien comprise et d'autres aspects et avantages apparaîtront clairement à la lecture de la description qui suit, donnée en référence à la planche de dessins annexée sur laquelle :
- [Fig. 1] est une vue partielle du dessous d'un véhicule selon l'invention dans lequel le déflecteur sous-plancher présente une ouverture pour le passage d'un moyen de renfort, ladite ouverture étant en partie obstruée par une languette.
- [Fig. 2] représente une vue en coupe d'un agencement similaire à celui illustré en figure 1, mais dans lequel la languette est plus longue et présente un ajour.

Dans la description qui suit le terme « comprendre » est synonyme de « inclure » et n'est pas limitatif en ce qu'il concerne la présence d'autres éléments dans le véhicule ou le déflecteur sous-plancher auquel il se rapporte. Il est entendu que le terme « comprendre » inclut les termes « consister en ». Les termes « inférieur », « supérieur », « avant », « arrière » s'entendront par rapport à l'orientation générale du véhicule. Les termes « inférieur » et « bas » indiqueront une proximité avec le sol plus importante selon la direction verticale que les termes « supérieur » ou « haut ». Le terme « avant » indiquera un positionnement orienté vers le devant d'un véhicule selon la direction horizontale et le terme « arrière » indiquera un positionnement orienté vers l'arrière d'un véhicule selon la même direction. Sur les différentes figures, les mêmes références désignent des éléments identiques ou similaires.

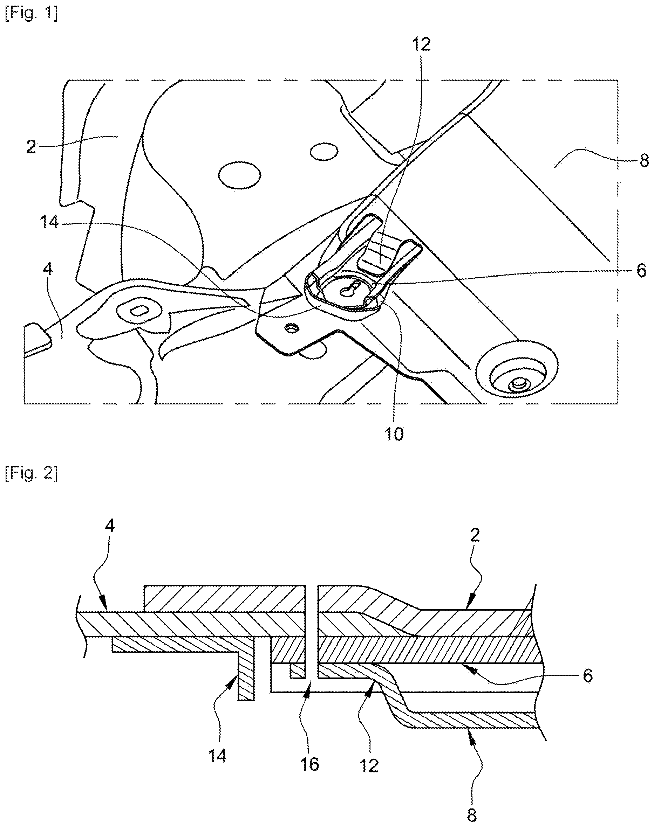

On se référera en premier lieu à la figure 1. Le soubassement 2 est la partie qui sert de socle au châssis d'un véhicule automobile. C'est l'endroit le plus exposé aux projections d'eau, de boue, de gravillons et de sel de déneigement. Le berceau 4 du véhicule est un support en métal et permet de supporter le moteur du véhicule. Le berceau 4 est fixé par une de ses extrémités sous la partie avant du soubassement 2. Le berceau 4 devant supporter un poids relativement important, au moins un moyen de renfort 6 est présent afin de renforcer l'attachement entre le berceau 4 et le soubassement 2. Ce moyen de renfort peut se présenter sous forme d'un tirant métallique, par exemple en acier. Il se présente avantageusement sous forme d'un profilé en U montrant un fond et deux ailes latérales agencé pour être ouvert en direction du sol. De manière préférentielle, au moins deux moyens de renfort sont disposés entre le berceau et le soubassement. L'extrémité arrière du moyen de renfort (non visible sur la figure 1) est fixée au soubassement 2, tandis que l'extrémité avant du moyen de renfort 6 est fixée au berceau 4.

Afin de limiter les risques de casse du déflecteur 8 sous-plancher pendant les montées et descentes des trottoirs, le déflecteur 8 sous-plancher est disposé, dans sa portion avant, le plus proche possible de la surface inférieure du berceau 4 de moteur et de la surface inférieure de la partie avant du soubassement 2, de manière à montrer une garde au sol la plus importante possible, alors que sa partie arrière est disposée écartée de la surface inférieure du soubassement. Cette caractéristique de l'invention donne au déflecteur 8 sous-plancher un profil général incurvé en forme de S.

Ainsi, selon l'invention, la portion avant et la portion arrière du déflecteur 8 sous-plancher s'étendent selon des plans horizontaux étagés selon l'axe vertical de manière à ce que la portion avant s'étende selon un plan supérieur au plan selon lequel s'étend la portion arrière. La figure 1 montre un tel déflecteur 8 sous-plancher qui est fixé sous la partie avant du soubassement 2 et sous la partie arrière du berceau 4.

Comme on peut le constater, la configuration à deux niveaux présentée par le déflecteur 8 sous-plancher ne lui permet plus d'englober complètement les moyens de renfort 6 entre le berceau 4 et le soubassement 2. Ainsi, selon un mode de réalisation préféré de l'invention, le déflecteur 8 sous-plancher recouvre en partie seulement le moyen de renfort 6. Ledit moyen de renfort 6 traverse alors la paroi dudit déflecteur 8 sous-plancher par une ouverture s'étendant entre ses portions avant et arrière.

La vue en coupe de la figure 2 permet de visualiser que la portion arrière du déflecteur 8 sous-plancher est plus basse que la portion avant. Leur jonction se fait selon un plan incliné, permettant ainsi à l'air de s'écouler plus aisément sous le véhicule. Le fait que la portion avant, située au niveau du berceau 4, soit donc remontée, par rapport à la portion arrière et selon l'axe vertical du véhicule, présente l'avantage de faciliter l'écoulement de l'air sous le véhicule et de réduire les risques de casse, notamment lors des montées et descentes de trottoir.

Avantageusement, afin de minimiser les entrées d'air et d'eau par la ou lesdites ouvertures 10, le déflecteur 8 sous-plancher comprend une languette 12 au niveau d'au moins une des ouvertures 10. La languette 12 est préférentiellement configurée pour s'étendre depuis le bord situé au niveau de la portion arrière du déflecteur 8 sous-plancher en direction du fond du profilé entre lesdites ailes latérales du profilé de manière à obstruer au moins en partie ladite ouverture 10. Néanmoins, l'homme du métier peut concevoir des languettes s'étendant depuis le bord de l'ouverture disposé au niveau de la portion avant du déflecteur sous-plancher.

Selon une première mise en oeuvre de l'invention représentée aux figures 1 et 2, la languette 12 présente deux extrémités dont une extrémité rattachée à un bord de l'ouverture et une extrémité libre. L'homme du métier aura avantage à ce qu'au moins une languette 12 soit configurée pour que son extrémité libre se place en appui contre l'élément de renfort 8 ou contre son fond lorsque ce dernier se présente sous une forme de profilé en U.

Selon une deuxième mise en oeuvre de l'invention non représentée, les deux extrémités de la languette sont reliées chacune à un bord opposé de l'ouverture de sorte à diviser ladite ouverture en deux. Il est ainsi défini deux ouvertures latérales traversées par les ailes du profilé formant le moyen de renfort. De préférence, la languette comprend un ajour destiné à recevoir un organe de fixation, ledit ajour étant aligné avec un ajour présenté par ledit moyen de renfort pour sa fixation sur le berceau. Que la languette soit reliée aux bords de l'ouverture par une ou deux extrémités, elle présente avantageusement un profil incurvé de manière à se placer en partie horizontalement selon un plan parallèle à celui du fond du moyen de renfort. Ce profil permet ainsi à l'air de s'écouler de façon continue sur le déflecteur 8 sous-plancher et favorise donc les propriétés aérodynamiques du véhicule.

Idéalement, au moins une languette 12 est venue de matière avec ledit déflecteur 8 sous-plancher. Le déflecteur 8 sous-plancher est préférentiellement réalisé en un matériau plastique et, de préférence, thermoplastique choisi parmi l'acrylonitrile butadiène styrène (ABS), le polypropylène (PP), le polyphtalamide (PPA), le polyétheréthercétone (PEEK), polysulfure de phénylène (PPS), le polyamide-imide (PAI), le polyetherimide (PEI), le polyarylamide (PAA), et/ou le polyamide (PA). Il est ainsi possible de réaliser la ou les languettes 12 et la ou les ouvertures 10 au cours de l'opération de moulage dudit déflecteur 8 sous-plancher. Eventuellement, le matériau plastique utilisé est un composite comprenant une matrice thermoplastique et un renfort en fibres, telles que des fibres de verre.

Les figures 1 et 2 illustrent la possibilité de la présence d'un rebord 14, orienté selon l'axe vertical du véhicule, au niveau d'une ouverture 10. Comme on peut le voir, ledit rebord 14 s'étend depuis le bord de la ou des ouvertures 10 au niveau de la portion avant du déflecteur 8 sous-plancher. Le rebord 14 borde au moins partiellement ladite ouverture 10, et contribue à son obstruction. Le rebord 14 s'étend depuis le déflecteur 8 sous-plancher au maximum jusqu'à la hauteur de la portion arrière de façon à ne pas aller plus bas que la portion arrière dudit déflecteur 8 sous-plancher. Préférentiellement, l'extrémité basse du rebord est située au niveau d'un plan intermédiaire disposé entre la portion arrière et la portion avant dudit déflecteur 8 sous-plancher.

Selon une mise en oeuvre de l'invention, l'extrémité de la languette 12 qui appuie sur l'extrémité avant du moyen de renfort 6 a une surface équivalente à la surface de l'ouverture 10 et comprend un ajour 16 destiné à recevoir un organe de fixation (voir figure 2). Lorsque la surface de la languette 12 équivaut à la totalité de l'ouverture, la languette 12 s'étend jusqu'à la paroi 14 verticale. L'ajour 16 est situé en regard de l'extrémité avant du moyen de renfort 6. Cette configuration particulière permet de rajouter un moyen de fixation entre le déflecteur 8 sous-plancher, le soubassement 2 et le berceau 4, éliminant définitivement toutes les vibrations dues notamment au roulage. L'obstruction totale de l'ouverture 10 du déflecteur 8 sous-plancher permet également de supprimer toute possibilité d'entrée d'éléments externes dans les organes de fonctionnement du véhicule et permet de maximiser les propriétés aérodynamiques du véhicule.

Selon une mise en oeuvre préférée de l'invention, l'ajour 16 est aligné avec les ajours montrés par le berceau 4 et le soubassement 2 pour leur fixation ensemble, par exemple par vis. Cela permet une fixation rapide des éléments entre eux lors du montage. L'utilisation de vis permet aussi le démontage de la structure, qui peut être nécessaire lors d'une opération de réparation.

Le déflecteur 8 sous-plancher permet de protéger les organes de fonctionnement du véhicule, tels que par exemple, des batteries dans le cas d'un véhicule électrique ou hybride.

## Revendications

1. - Véhicule automobile comprenant
- un soubassement (2) présentant une partie avant et une partie arrière,
- un berceau (4) de moteur,
- un déflecteur (8) sous-plancher fixé à la fois sous la partie avant dudit soubassement (2) et sous ledit berceau (4), ledit déflecteur (8) sous-plancher comprenant une portion avant et une portion arrière, la portion avant étant agencée en regard dudit berceau (4) ;la portion avant et la portion arrière du déflecteur (8) sous-plancher s'étendant selon des plans horizontaux étagés selon l'axe vertical de manière à ce que la portion avant s'étende selon un plan supérieur au plan selon lequel s'étend la portion arrière, le véhicule étant **caractérisé en ce qu'**il comprend au moins un moyen de renfort (6) ayant une extrémité arrière fixée à la partie avant dudit soubassement (2) et une extrémité avant fixée audit berceau (4), le déflecteur (8) sous-plancher étant configuré pour recouvrir partiellement ledit moyen de renfort (6) et présentant au moins une ouverture (10) au niveau de sa partie avant agencée pour être traversée par l'extrémité avant d'un moyen de renfort (6).

2. - Véhicule selon la revendication 1, le ou les moyens de renfort (6) se présentant sous forme d'un profilé en forme de U comprenant un fond et deux ailes latérales et agencé pour être ouvert en direction du sol ; le véhicule est **caractérisé en ce que** la ou au moins une desdites ouvertures est agencée pour qu'un de ses bords soit disposé sur la portion arrière dudit déflecteur (8) sous-plancher et son bord opposé sur la portion avant et **en ce que** ledit déflecteur (8) sous-plancher comprend une languette (12) au niveau de ladite ouverture (10), la languette (12) étant configurée pour s'étendre depuis le bord de l'ouverture (10) situé au niveau de la portion arrière du déflecteur (8) sous-plancher en direction du fond du profilé entre lesdites ailes latérales du profilé de manière à obstruer au moins en partie ladite ouverture (10).

3. - Véhicule selon la revendication 2, la languette (12) présentant une extrémité libre, le véhicule est **caractérisé en ce qu'**au moins une languette (12) est configurée pour que son extrémité libre se place en appui contre le fond du moyen de renfort (6) ; et/ou **en ce que** ladite languette (12) présente un profil incurvé de manière à ce que son extrémité libre s'étende horizontalement selon un plan parallèle à celui du fond du moyen de renfort (6).

4. - Véhicule selon la revendication 2, **caractérisé en ce qu'**au moins une languette (12) est reliée par ses deux extrémités aux bords de l'ouverture (10) de manière à définir deux fentes latérales traversées par les ailes du profilé formant le moyen de renfort (6); de préférence, la languette (12) comprend un ajour (16) destiné à recevoir un organe de fixation, ledit ajour (16) étant aligné avec un ajour présenté par ledit moyen de renfort (6) pour sa fixation sur le berceau (4).

5. - Véhicule selon l'une des revendications 2 à 4, le déflecteur (8) sous-plancher présentant un corps, le véhicule est **caractérisé en ce qu'**au moins une languette (12) est venue de matière avec ledit corps du déflecteur (8) sous-plancher.

6. - Véhicule selon l'une des revendications 1 à 5, **caractérisé en ce que** le bord de la ou des ouvertures (10) présente un rebord (14) s'étendant depuis la portion avant du déflecteur (8) sous-plancher en direction du sol.

## Patentansprüche

1. - Kraftfahrzeug mit
- ein Untergestell (2) mit einem vorderen und einem hinteren Teil,
- ein Motorbett (4),
- einen Unterboden-Deflektor (8), der sowohl unter dem vorderen Teil des Unterteils (2) als auch unter dem Boden (4) befestigt ist, wobei der Unterboden-Deflektor (8) einen vorderen und einen hinteren Teil umfasst, wobei der vordere Teil dem Boden (4) gegenüberliegend angeordnet ist, wobei sich der vordere und hintere Teil des Unterboden-Deflektors (8) in horizontalen Ebenen erstrecken, die in vertikaler Richtung Der vordere Teil erstreckt sich in einer Ebene, die größer ist als die Ebene, in der sich der hintere Teil erstreckt, wobei das Fahrzeug **dadurch gekennzeichnet ist, dass** es mindestens ein Verstärkungsmittel (6) mit einem hinteren Ende, das an dem vorderen Teil des Unterteils (2) befestigt ist, und einem vorderen Ende aufweist, das an dem Träger (4) befestigt ist, wobei das Deflektor (8) so ausgebildet ist, dass es das Verstärkungsmittel (6) teilweise bedeckt und mindestens eine Öffnung aufweist (1) 10) an seinem vorderen Teil, der so angeordnet ist, dass er von dem vorderen Ende eines Verstärkungsmittels (6) durchquert werden kann.

2. - Fahrzeug nach Anspruch 1, wobei das oder die Verstärkungsmittel (6) in Form eines U-förmigen Profils mit einem Boden und zwei seitlichen Flügeln ausgebildet und in Richtung auf den Boden offen sind; Das Fahrzeug ist **dadurch gekennzeichnet, dass** die oder mindestens eine der Öffnungen so angeordnet ist, dass einer seiner Ränder auf dem hinteren Teil des Unterbodendeflektors (8) und dessen gegenüberliegender Rand auf dem vorderen Teil angeordnet ist, und dass der Unterbodendeflektor (8) an der Öffnung (10) eine Lasche (12) aufweist, wobei die Lasche (12) so ausgebildet ist, dass sie sich von dem Rand der Öffnung erstreckt (1). 10) am hinteren Teil des Bodendeflektors (8) in Richtung auf den Boden des Profils zwischen den seitlichen Flanschen des Profils angeordnet ist, um die Öffnung (10) zumindest teilweise zu verschließen.

3. - Fahrzeug nach Anspruch 2, wobei die Lasche (12) ein freies Ende aufweist, **dadurch gekennzeichnet, dass** das Fahrzeug mindestens eine Lasche (12) so ausgebildet ist, dass ihr freies Ende an dem Boden des Verstärkungsmittels (6) anliegt; und/oder dass die Zunge (12) ein gekrümmtes Profil aufweist, sodass sich ihr freies Ende horizontal in einer Ebene erstreckt, die parallel zu der Ebene des Bodens des Verstärkungsmittels (6) verläuft.

4. - Fahrzeug nach Anspruch 2, **dadurch gekennzeichnet, dass** mindestens eine Zunge (12) an ihren beiden Enden mit den Rändern der Öffnung (10) verbunden ist, um zwei seitliche Schlitze zu definieren, die von den Schenkeln des das Verstärkungsmittel (6) bildenden Profils durchquert werden; Vorzugsweise umfasst die Lasche (12) eine Durchbrechung (16) zur Aufnahme eines Befestigungsorgans, wobei die Durchbrechung (16) mit einer Durchbrechung ausgerichtet ist, die von dem Verstärkungsmittel (6) zur Befestigung an der Wiege (4) vorgesehen ist.

5. - Fahrzeug nach einem der Ansprüche 2 bis 4, wobei der Unterboden-Deflektor (8) einen Körper aufweist, wobei das Fahrzeug **dadurch gekennzeichnet ist, dass** mindestens eine Zunge (12) mit dem Unterboden-Deflektorkörper (8) aus Material hergestellt ist.

6. - Fahrzeug nach einem der Ansprüche 1 bis 5, **dadurch gekennzeichnet, dass** der Rand der Öffnung(en) (10) einen Rand (14) aufweist, der sich vom vorderen Abschnitt des Unterboden-Deflektors (8) in Bodenrichtung erstreckt.

## Claims

1. - Motor vehicle including
- a base (2) having a front and a rear part,
- a cradle (4) of engine,
- a deflector (8) underfloor fixed both under the front part of the said underfloor (2) and under the said cradle (4), the said deflector (8) underfloor consisting of a front and a rear portion, the front portion being arranged next to the said cradle (4); the front and rear portion of the deflector (8) underfloor extending according to horizontal plans vertical axis so that the front portion extends in a plane greater than the plane in which the rear portion extends, the vehicle being **characterized in that** it includes at least one means of reinforcement (6) having a rear end fixed to the front part of the said underlay (2) and a front end fixed to that cradle (4), the underfloor deflector (8) being configured to partially cover the said means of reinforcement (6)) and having at least one opening (10) at the front of it arranged to be crossed by the front end of a means of reinforcement (6).

2. - Vehicle according to claim 1, the means of reinforcement (6) in the form of a U-shaped profile comprising a bottom and two side wings and arranged to be opened towards the ground; the vehicle is **characterized in that** one or more of the above openings is arranged so that one of its edges is placed on the rear portion of the said deflector (8) under-floor and the opposite edge on the front portion and that the said deflector (8) under-floor includes a tab (12) at the opening (10), the tab (12) being configured to extend from the edge of the vehicle the opening (10) located at the rear portion of the deflector (8) below-floor towards the bottom of the profile between the said lateral wings of the profile so as to obstruct at least part of the said opening (10).

3. - Vehicle according to Claim 2, the tether (12) having a free end, the vehicle is **characterized in that** at least one tether (12) is configured to place its free end in support of the bottom of the reinforcement medium (6); and/or the said tab (12) has a curved profile so that its free end extends horizontally in a plane parallel to the bottom of the reinforcement medium (6).

4. - Vehicle according to Claim 2, characterized that at least one tab (12) is connected by its two ends to the edges of the opening (10) so as to define two side slits crossed by the wings of the profile forming the means of reinforcement (6); preferably, the tab (12) includes a day (16) for the purpose of receiving a fastening device, the day (16) being aligned with a day presented by that means of reinforcement (6) for its fixation on the cradle (4).

5. - Vehicle according to one of the claims 2 to 4, the underfloor deflector (8) presenting a body, the vehicle is **characterized in that** at least one tab (12) came from material with the said body of the underfloor deflector (8).

6. - Vehicle according to one of the claims 1 to 5, characterized as the edge of the opening(s) (10) has a rim (14) extending from the front portion of the deflector (8) subfloor towards the ground.
